**Europäisches Patentamt**

**European Patent Office**

**Office européen des brevets**

(19)

(11) Numéro de publication : **0 328 472 B1**

(12)

# FASCICULE DE BREVET EUROPEEN

(45) Date de publication du fascicule du brevet :
**04.11.92 Bulletin 92/45**

(51) Int. Cl.⁵ : **F16K 31/363**, F15B 11/06,
F16L 27/08, F15B 15/20

(21) Numéro de dépôt : **89460004.8**

(22) Date de dépôt : **07.02.89**

(54) **Raccord-démarreur pour la mise en pression progressive d'installations pneumatiques.**

(30) Priorité : **09.02.88 FR 8801722**

(43) Date de publication de la demande :
**16.08.89 Bulletin 89/33**

(45) Mention de la délivrance du brevet :
**04.11.92 Bulletin 92/45**

(84) Etats contractants désignés :
**CH DE ES FR GB IT LI SE**

(56) Documents cités :
**DE-U- 8 426 955**
**FR-A- 2 273 180**
**FR-A- 2 343 280**

(56) Documents cités :
**FR-A- 2 383 377**
**FR-A- 2 597 954**
**US-A- 2 304 404**
**US-A- 4 415 001**

(73) Titulaire : **LEGRIS SA**
**74 rue de Paris**
**F-35014 Rennes (FR)**

(72) Inventeur : **Levenez, Yves**
**57 rue de la Baste**
**F-77000 Vaux le Penil (FR)**

(74) Mandataire : **Dubreuil, Annie et al**
**Cabinet Ballot-Schmit 23, rue des Peupliers**
**B.P. 855**
**F-56108 Lorient Cédex (FR)**

EP 0 328 472 B1

## Description

La présente invention concerne des raccord-démarreurs pour la mise en pression progressive d'installations pneumatiques. Elle concerne plus particulièrement de tels raccords-démarreurs à fixer sur des composants pneumatiques récepteurs ou émetteurs.

Il arrive fréquemment que pendant la coupure d'air comprimé alimentant une installation pneumatique, les vérins qu'elle comporte soient volontairement ou non dérangés de la position qu'ils devraient occuper. La remise brutale en pression par la vanne de sectionnement s'accompagne alors de chocs préjudiciables au matériel et peut être la cause d'accidents corporels. Pour parer à ces dangers, il existe des appareils appelés démarreurs qui assurent à l'arrivée de l'air comprimé, dans un premier temps, un remplissage progressif qui permet aux actionneurs de regagner doucement leur position, puis d'ouvrir pleinement le passage au débit normal pour le fonctionnement de l'installation.

Ces démarreurs sont des composants fixes, encombrants et onéreux, qui nécessitent l'emploi de raccords de tuyauteries. En outre, construits pour être placés en tête du réseau de distribution d'air interne à l'installation, ils en protègent tout le volume, d'où une attente de remplissage plus longue, alors que seuls certains actionneurs demandent une protection.

La présente invention permet d'éviter ces inconvénients par la réalisation de raccords-démarreurs se présentant, comme les raccords à réglage de débit uni-directionnel décrits dans la demande de brevet français FR-A-2 597 954, sous la forme d'un raccord équerre dit "banjo", comportant un module équipé de moyens de raccordement de tuyauterie, lequel module est orientable autour d'une vis creuse au moment de la fixation du raccord, et interchangeable en fonction de la nature et du diamètre à raccorder.

Deux versions d'appareils différents quant à leur emploi sont prévues. La première version est destinée à se visser sur des composants pneumatiques récepteurs tels des distributeurs, le fluide arrivant par la tuyauterie qui leur est raccordée. Les appareils de la seconde version sont destinés à se visser sur des composants pneumatiques émetteurs, telles les vannes de sectionnement et de purge appelées sectionneurs, le débit d'air sortant dans ce cas par la tuyauterie qui leur est raccordée.

Conformément à l'invention, un raccord-démarreur pour la mise en pression progressive d'installations pneumatiques, sous la forme d'un raccord équerre dit "banjo" constitué d'une vis creuse comportant à une extrémité un orifice fileté permettant sa fixation dans l'orifice d'un composant pneumatique, et d'un module séparable et orientable autour d'elle, est caractérisé en ce que la vis creuse contient un mécanisme constitué d'un clapet obturant au repos son siège qui constitue le passage principal de fluide à travers le raccord-démarreur, par l'effet d'un léger ressort de rappel de force non significative au regard des forces mises en jeu par les pressions, ledit clapet étant solidaire d'une tige s'étendant en direction opposée du siège vers l'extrémité de la vis creuse opposée à son orifice fileté, et dont l'extrémité libre, à l'atmosphère au-delà d'un joint, est guidée dans l'alésage d'un bouchon qui ferme l'appareil, le ressort étant coaxial à la tige dont la section est plus petite au niveau dudit joint que celle présentée par le clapet sur son siège, la vis creuse comportant en outre des moyens pour conduire un débit réduit de fluide en dérivation du siège pour le remplissage de l'installation en aval de l'appareil, le clapet présentant par ailleurs des surfaces opposées soumises à la pression aval et à la pression amont, dont les aires, perpendiculairement à sa direction de déplacement, sont telles que son ouverture s'opère lorsque, d'une part, une pression minimale est atteinte en amont, et d'autre part, une pression aval dépassant un seuil fonction de la pression amont est établie.

D'autres caractéristiques et avantages de l'invention seront mieux compris à la lecture de la description qui va suivre de plusieurs modes de réalisation, faite en relation avec les dessins annexés (où les mêmes éléments sont désignés par les mêmes références numériques), parmi lesquels :

la Fig. 1 est une coupe longitudinale d'une première forme de réalisation de raccord-démarreur selon l'invention dans la version à fixer sur un composant pneumatique récepteur,

la Fig. 2 est une coupe longitudinale d'une première forme de réalisation de raccord-démarreur selon l'invention dans la version à fixer sur un composant pneumatique émetteur,

les Figs. 3 à 6 illustrent des variantes des moyens de remplissage à débit réduit et contrôlé pour le raccord-démarreur de la Fig. 1,

les Figs 7 et 8 illustrent des moyens de réglage du débit de remplissage progressif pour le raccord-démarreur de la Fig. 2,

la Fig. 9 est une coupe longitudinale d'une autre forme de réalisation de raccord-démarreur selon l'invention dans la version à fixer sur un composant pneumatique récepteur,

la Fig. 10 illustre une variante des moyens de remplissage à débit réduit et contrôlé pour le raccord-démarreur de la Fig. 9,

la Fig. 11 est une coupe longitudinale d'une autre forme de réalisation de raccord-démarreur selon l'invention dans la version à fixer sur un composant émetteur,

la Fig. 12 illustre une variante des moyens de remplissage à débit réduit et contrôlé pour le raccord-démarreur de la Fig. 11.

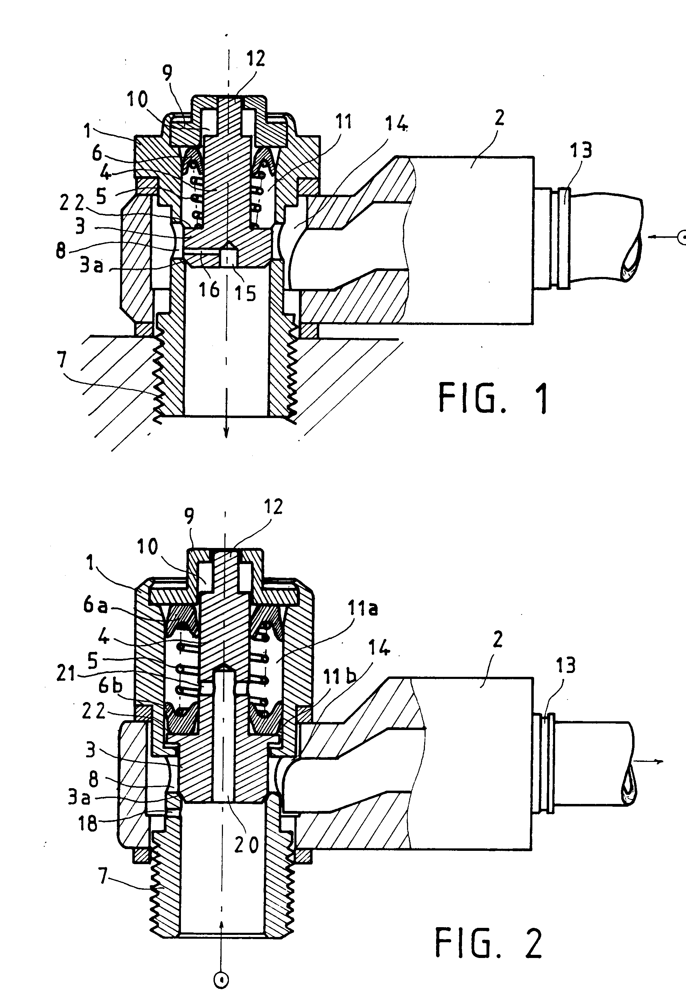

Suivant la Fig. 1, le raccord-démarreur est composé d'un module 2 comportant un orifice 13 de raccordement d'une tuyauterie par laquelle arrive l'air comprimé, et d'une vis creuse 1 autour de laquelle il peut être orienté. Une chambre annulaire de répartition 14 est ménagée entre le module 2 et la vis creuse 1 et permet la liaison entre la tuyauterie et l'intérieur de la vis creuse par une série de trous périphériques 8 pratiqués dans sa paroi. La vis creuse 1 présente un orifice fileté 7 constituant dans cette version la sortie, apte à se visser dans l'orifice d'alimentation d'un appareil récepteur, et séparé des trous 8 par un clapet 3 obturant au repos son siège 3a par la force d'un ressort de rappel 5. Le clapet 3 est solidaire d'une tige 4 s'étendant en direction opposée à sa face d'appui, à travers un joint 6 à double lèvre à profil en U. L'extrémité de la tige 4 au-delà du joint 6 est à l'atmosphère et guidée dans un alésage 10 d'un bouchon 9 qui ferme l'appareil et sur lequel s'applique le joint 6. Le ressort 5 travaille en extension et s'appuie par un bout dans le creux du profil du joint 6, et par l'autre sur l'épaulement 22 formé par la jonction du clapet 3 et de sa tige 4 de section plus petite. Le joint 6 statique dont la lèvre extérieure est au contact de la paroi interne de la vis creuse 1 délimite avec le clapet 3 obturant son siège 3a une chambre 11 ouverte sur la chambre annulaire 14 par les trous périphériques 8.

Suivant la Fig. 1, le clapet 3 est percé axialement sur sa face d'appui d'un canal 15 en liaison avec un canal radial calibré 16 débouchant sur la chambre 14. A l'arrivée de la pression P1 venant du réseau d'alimentation en amont, celle-ci s'écoule par les canaux 15 et 16 vers l'installation en aval qu'elle remplit progressivement d'une pression croissante P2. Simultanément, la pression P1 dans la chambre 11 agit en fermeture du clapet 3 par son action sur la différence des sections du clapet et de sa tige dans le joint 6. La pression P2 en aval agit en ouverture du clapet par son action sur sa pleine section. Quand l'équilibre de ces forces antagonistes est établi, le clapet 3 s'ouvre, libérant le plein passage. En appelant S1 la section du clapet sur son siège 3a, S2 celle de la tige 4 dans le joint 6, et R la force du ressort 5, cette ouverture a lieu quand :

$$P1(S1 - S2) + R = P2.S1$$

La tige 4 comporte à son extrémité libre un rétrécissement 12 qui dépasse hors de l'appareil au moment de l'ouverture du clapet et sert de témoin visuel. L'épaulement formé par le rétrécissement 12 et sa jonction avec la tige 4, en venant buter au fond de l'alésage de guidage 10 du bouchon 9, limite la course de l'ensemble clapet-tige. Au moment de la purge par le sectionneur en amont, le fluide traversant l'appareil à rebours maintient le clapet ouvert tant que sa valeur P agissant sur la section de la tige équilibre la force du ressort, soit pour une valeur telle que PS2 = R.

Le clapet se fermant au-dessous de cette valeur, un faible reliquat de pression achève de se vider rapidement à travers les canaux 15 et 16. La très faible force du ressort 5 permet ainsi l'absence d'un clapet unidirectionnel de purge.

Dans le raccord-démarreur de la Fig. 2, à fixer sur un composant émetteur, la pression venant du réseau en amont arrive par l'orifice fileté de la vis creuse et sort vers l'aval par l'orifice raccordable du module orientable. Selon la Fig. 2, cette version se différencie principalement de la version précédente selon la Fig. 1 par le fait que la vis creuse 1 comporte un joint supplémentaire 6b à double lèvre à profil en U qui prend appui sur l'épaulement 22 à la jonction du clapet 3 avec sa tige 4, et dont la lèvre extérieure peut glisser de façon étanche sur la paroi cylindrique interne de la vis creuse 1. Le joint 6b délimite avec le joint statique 6a une première chambre 11a ouverte sur la face d'appui du clapet 3 et l'orifice d'entrée 7 par un canal axial 20 en liaison avec un canal radial 21 pratiqués dans l'ensemble clapet-tige. Une seconde chambre 11b, délimitée par le joint 6b et le clapet 3 en fermeture de son siège 3a, est ouverte sur la tuyauterie raccordée au module 2 par les trous périphériques 8 et la chambre annulaire 14.

Suivant la Fig. 2, à l'ouverture du sectionneur en amont et sur lequel se visse directement l'appareil, la pression P1 du réseau s'écoule à travers un trou calibré 18 pratiqué dans la paroi de la vis creuse 1 entre l'orifice d'entrée 7 et le clapet 3, pour déboucher dans la chambre annulaire 14 et remplir progressivement l'installation aval d'une pression croissante P2. La pression P1 agit en ouverture du clapet 3 sur sa pleine section et en fermeture par son action dans la chambre 11a sur la section annulaire résultant de la différence du diamètre extérieur du joint 6b et du diamètre intérieur du joint 6a. La pression P2 en aval agit en ouverture du clapet par son action sur la section annulaire résultant de la différence entre le diamètre extérieur du joint 6b et celui du clapet 3 sur son siège 3a. Si on appelle S1 la section du clapet, S2 la section de la tige 4 dans le joint 6a, S3 la section du cercle extérieur du joint 6b, et R la force du ressort 5, le clapet s'ouvre au plein débit quand l'équilibre des forces antagonistes est établi, soit quand :

$$P1(S3 - S2 - S1) + R = P2(S3 - S1)$$

Comme dans la version précédente suivant la Fig. 1, le clapet reste ouvert tant que la valeur P qui traverse l'appareil et qui agit sur S2 équilibre la force du ressort 5, soit tant que PS2 = R

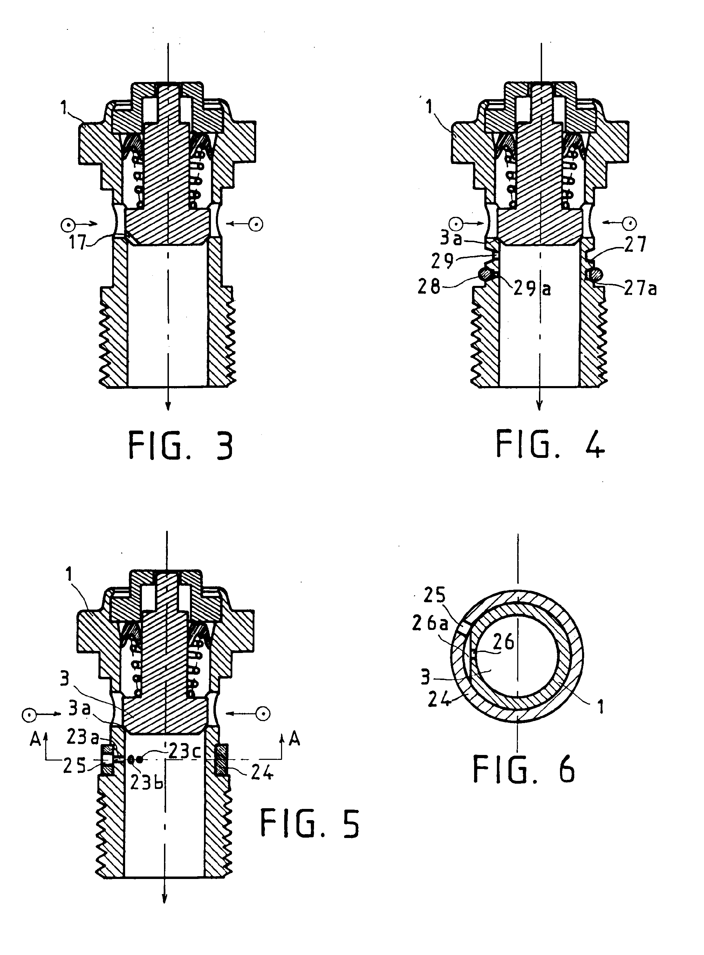

La Fig. 3 montre un autre moyen d'établir un débit réduit de remplissage progressif de valeur fixe en dérivation du passage principal 3a : suivant la Fig. 3, une rainure 17 de largeur et profondeur calibrées est pratiquée sur la portée du clapet 3 sur son siège 3a.

Les Figs. 4, 5 et 6 montrent différents moyens d'établir un débit réduit de remplissage progressif de valeur variable, en dérivation du passage principal 3a, moyens plus particulièrement mais non exclusivement applicables à la version d'appareils décrite suivant la Fig. 1.

Suivant la Fig. 4, des gorges circulaires 27 et 27a sont pratiquées sur la paroi extérieure de la vis creuse 1 au niveau de la chambre annulaire 14 du module orientable 2. La paroi de la vis creuse est traversée de trous calibrés différents 29 et 29a, chacun d'eux partant du fond de sa gorge respective 27 et 27a. Tel que représenté, le montage d'un joint torique 28 dans la gorge 27a masque le trou 29a, permettant le passage du fluide à débit réduit par le seul trou 29. En supprimant le joint torique 28, on dispose ainsi de trois valeurs différentes de débit réduit, la valeur de l'une d'elles étant la somme des deux autres.

Suivant la Fig. 5, une bague de caoutchouc 24 ceinture la paroi extérieure de la vis creuse 1 au niveau de la chambre annulaire 14 du module 2. Cette bague 24 comporte un trou 25 pouvant être mis en correspondance, par rotation de la bague, avec l'un d'une pluralité de trous calibrés différents 23a, 23b, 23c pratiqués dans la paroi de la vis creuse et établissant la liaison entre l'orifice fileté 7 et la chambre annulaire 14, ces trous étant plus petits que le trou 25.

La Fig. 6 représente en coupe transversale AA' une variante du procédé précédent suivant la Fig. 5, selon laquelle le trou 25 de la bague 24 peut être ajusté sur un point quelconque d'une rainure semi-circulaire 26a s'étendant de part et d'autre d'un unique trou 26 dans la paroi de la vis creuse 1, et dont la profondeur et/ou la largeur sont progressivement décroissantes en s'éloignant du trou.

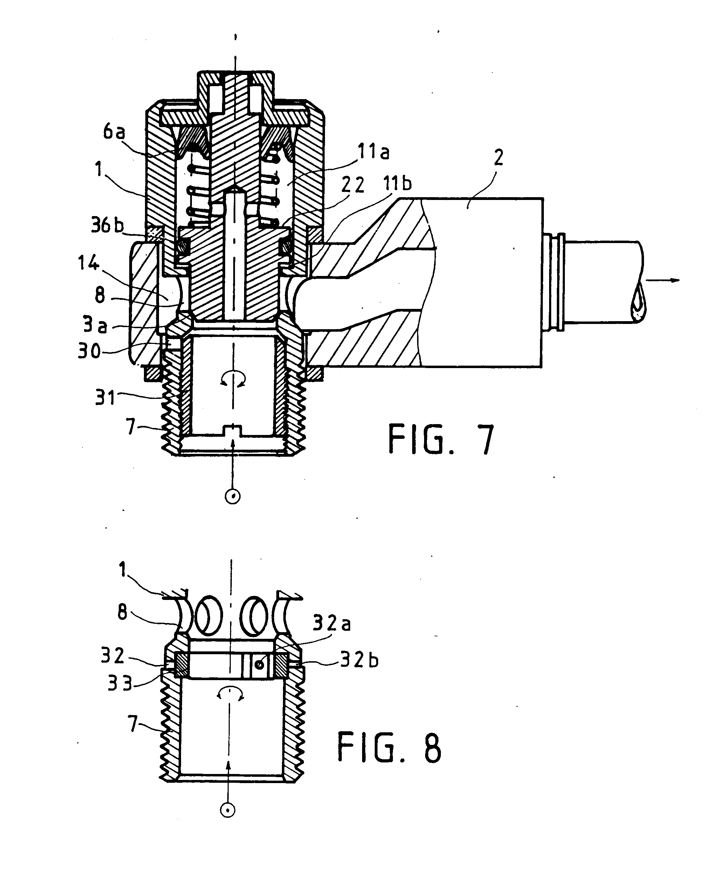

Les Fig. 7 et 8 montrent des moyens d'établir un débit réduit de remplissage progressif de valeur variable en dérivation du passage principal 3a, moyens plus spécialement mais non exclusivement applicables à la version d'appareils suivant la Fig. 2.

Suivant la Fig. 7, l'intérieur de l'orifice fileté d'entrée 7 de la vis creuse 1 reçoit une bague filetée 31 qui peut s'y visser à l'aide d'un outil approprié. L'extrémité de cette bague 31 peut masquer partiellement, à volonté, un trou 30 établissant la liaison entre l'orifice fileté 7 et la chambre annulaire 14 du module 2.

Suivant la Fig. 8, l'orifice fileté 7 comporte une bague élastique semi-circulaire 33, apte à être réglée en rotation dans une gorge de retenue à l'aide d'un outil approprié, pour ne démasquer par le jeu entre ses extrémités qu'un trou 32, 32a ou 32b pratiqués dans la paroi de la vis creuse et établissant la liaison entre l'orifice fileté 7 et la chambre annulaire 14 du module 2.

La Fig. 7 illustre également un autre moyen d'établir l'étanchéité entre la chambre 11a et la chambre 11b, en utilisant un joint torique 36b monté dans une gorge périphérique du clapet 3 au lieu du joint à double lèvre 6b.

Suivant les Figs. 1 et 2, on peut remarquer que les deux versions de raccords-démarreurs ne se différencient que par la présence d'un joint supplémentaire et des canaux 20 et 21 de l'ensemble tige-clapet. La réalisation des deux types d'appareils dans une même grandeur peut donc se faire à partir d'éléments communs, tels que le bouchon 9 et la vis creuse 1 dont les dimensions seraient celles de l'appareil appartenant à la version décrite suivant la Fig. 2. On peut constater aussi que la présence d'un joint d'étanchéité du clapet 3 sur son siège 3a n'est pas indispensable, une légère fuite à ce niveau n'ayant pour conséquence que d'augmenter la valeur du débit réduit, sans préjudice du parfait fonctionnement de l'appareil.

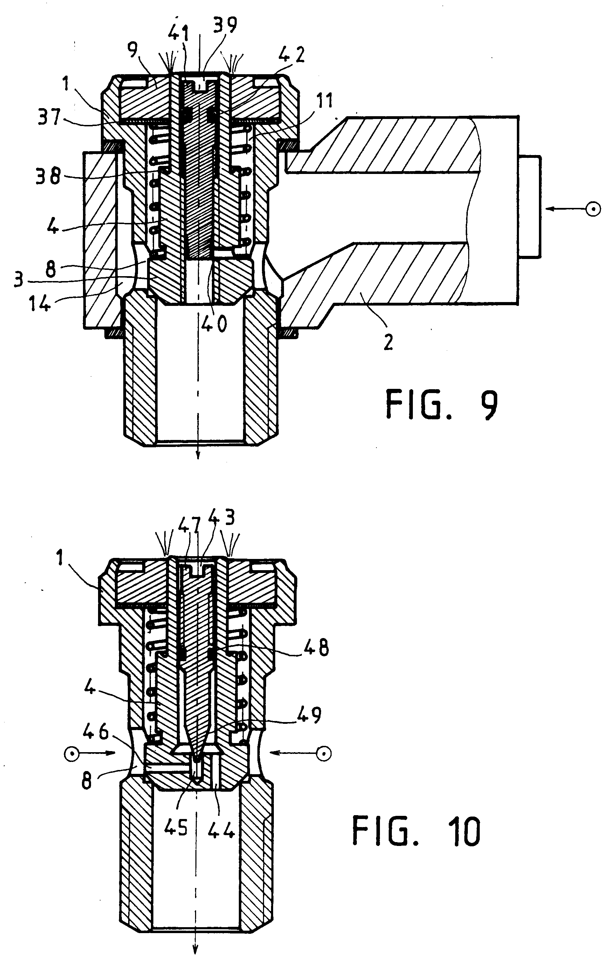

Dans le raccord-démarreur de la Fig. 9, du type à fixer sur un composant récepteur, un joint plat 37 remplace le joint à double lèvre 6 de la Fig. 1. Le joint plat 37 est serré entre la vis creuse 1 et le bouchon 9, sans assurer l'étanchéité autour de la tige 4. Par ailleurs, l'épaulement formé par le rétrécissement de la tige 4 présente une portée périphérique circulaire 38 qui vient s'appliquer sur le joint 37 lors de l'ouverture du clapet. Ainsi, lorsque la pression arrive dans le raccord par le module 2, tant que l'ouverture du clapet n'a pas eu lieu, une légère fuite d'air comprimé autour du sommet de la tige 4 témoigne de la mise en pression progressive et en indique la durée.

La Fig. 9 illustre également, ainsi que la Fig. 10, d'autres moyens pour établir un débit réduit de remplissage progressif de valeur variable, applicables à la version d'appareils à fixer sur un composant récepteur. Ces moyens présentent l'avantage de permettre un réglage par l'extrémité de la tige du clapet.

A la Fig. 9, l'ensemble clapet-tige est traversé par un canal axial 39 dont la partie inférieure est taraudée. Dans le canal axial 39, débouche un conduit radial 40 ouvert à son autre extrémité sur la chambre 11 communiquant par les trous 8 avec la chambre 14. Dans le canal 39, est vissée une tige 41 pourvue d'un joint 42, dont l'extrémité inférieure, légèrement biseautée, obture plus ou moins l'orifice du conduit radial 40.

Suivant la Fig. 10, l'ensemble clapet-tige présente un alésage axial 43 ouvert à l'extrémité supérieure de la tige 4, et dont l'extrémité inférieure est évasée. Dans celle-ci débouchent un ou plusieurs conduits latéraux 44 ouverts sur l'orifice de la vis creuse 1, et un conduit axial 45 communiquant avec un conduit radial 46 ouvert par un trou 8 sur la chambre annulaire 14.

Dans l'alésage 43, partiellement taraudé, est vissée une tige 47 pourvue d'un joint 48, dont l'extrémité inférieure forme un pointeau 49 engagé dans l'orifice du conduit 45 pour l'obturer plus ou moins. Dans cette forme de réalisation, l'air comprimé arrivant par les trous 8 passe dans les conduits 46 et 45, puis dans le ou les conduits 44.

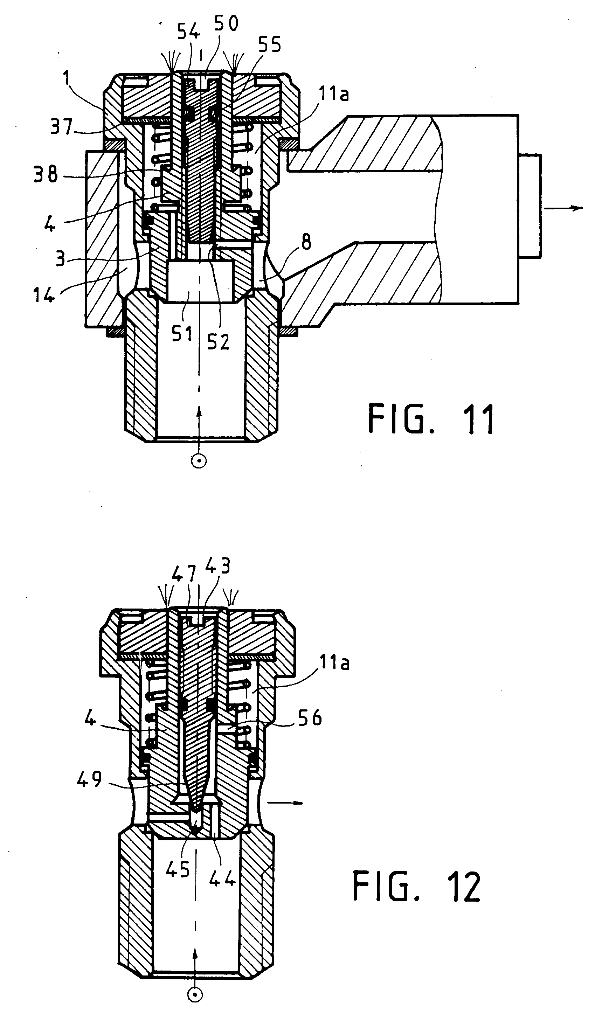

Le raccord-démarreur de la Fig. 11 est du type à fixer sur un élément émetteur, l'air comprimé arrivant par l'orifice de la vis creuse 1. Comme le raccord-démarreur de la Fig. 9, il comporte un joint plat 37 entourant la tige 4 à l'extrémité supérieure de la chambre 11a qui, lors du remplissage progressif, présente une légère fuite autour du sommet de la tige 4, jusqu'à l'ouverture du clapet pour laquelle la portée 38 arrive en contact sur le joint 37.

La Fig. 11 illustre également, ainsi que la Fig. 12, des moyens pour établir un débit réduit de remplissage de valeur variable, applicables à la version d'appareils à fixer sur un composant émetteur.

A la Fig. 11, l'ensemble clapet-tige est traversé par un alésage supérieur 50 prolongé par un alésage inférieur 51 de plus grand diamètre.

Un conduit radial 52 mène de l'alésage 50 à la chambre 14 par l'intermédiaire d'un trou 8, alors qu'un ou plusieurs canaux 53 de direction axiale mènent du fond de l'alésage 51 à la chambre 11a. Dans l'alésage 50, dont la partie inférieure est taraudée, est vissée une tige 54 pourvue d'un joint 55, dont l'extrémité inférieure, légèrement biseautée, obstrue plus ou moins l'orifice du conduit 52.

A la Fig. 12, l'ensemble clapet-tige comporte le même aménagement que celui de la Fig. 10, avec une tige-pointeau 47, 49 obturant plus ou moins l'orifice du conduit 45, seuls un ou plusieurs conduits supplémentaires 56 étant prévus entre l'alésage 43 et la chambre 11a pour la mise en pression de celle-ci.

La même remarque que celle concernant les Figs. 1 et 2 peut être faite concernant des raccords-démarreurs de chaque version pourvus de dispositifs de réglage de débit réduit à pointeau : à savoir qu'ils se différencient seulement par la présence ou non d'un joint à la base de la chambre 11a (dans le cas où ce joint est un joint à lèvre 6b), et par la présence ou non du conduit 56 de l'ensemble tige-clapet, ce qui permet de réaliser les deux types d'appareils dans une même grandeur à partir d'éléments communs.

## Revendications

1) Raccord-démarreur pour la mise en pression progressive d'installations pneumatiques, sous la forme d'un raccord équerre dit "banjo" constitué d'une vis creuse (1) comportant à une extrémité un orifice fileté (7) permettant sa fixation dans l'orifice d'un composant pneumatique, et d'un module (2) séparable et orientable autour d'elle, caractérisé en ce que la vis creuse (1) contient un mécanisme constitué d'un clapet (3) obturant au repos son siège (3a) qui constitue le passage principal de fluide à travers le raccord-démarreur, par l'effet d'un léger ressort de rappel (5) de force non significative au regard des forces mises en jeu par les pressions, ledit clapet (3) étant solidaire d'une tige (4) s'étendant en direction opposée du siège (3a) vers l'extrémité de la vis creuse (1) opposée à son orifice fileté (7), et dont l'extrémité libre, à l'atmosphère au-delà d'un joint, est guidée dans l'alésage (10) d'un bouchon (9) qui ferme l'appareil, le ressort (5) étant coaxial à la tige (4) dont la section est plus petite au niveau dudit joint que celle présentée par le clapet (3) sur son siège (3a), la vis creuse comportant en outre des moyens pour conduire un débit réduit de fluide en dérivation du siège (3a) pour le remplissage de l'installation en aval de l'appareil, le clapet (3) présentant par ailleurs des surfaces opposées soumises à la pression aval et à la pression amont, dont les aires, perpendiculairement à sa direction de déplacement, sont telles que son ouverture s'opère lorsque, d'une part, une pression minimale est atteinte en amont et, d'autre part, une pression aval dépassant un seuil fonction de la pression amont est établie.

2) Raccord-démarreur selon la revendication 1, caractérisé en ce que ledit joint au-delà duquel la tige (4) du clapet (3) est à l'atmosphère est un joint à double lèvre (6) dans lequel elle coulisse, appliqué sur le bouchon (9) et dont la lèvre extérieure étanche une chambre cylindrique (11) délimitée par le siège (3a) fermé par le clapet (3) et ouverte sur la chambre annulaire (14) du module (2) et son orifice (13) par des trous périphériques (8) dans la paroi de la vis creuse (1), le ressort de rappel (5) prenant appui par une extrémité dans le creux du profil du joint (6), et par l'autre extrémité sur l'épaulement (22) formé à la jonction du clapet (3) et de sa tige (4).

3) Raccord-démarreur selon la revendication 1 caractérisé en ce que ledit joint au-delà duquel la tige (4) du clapet (3) est à l'atmosphère est un joint plat (37) dans lequel elle coulisse, serré entre la vis creuse (1) et le bouchon (9) et autorisant une légère fuite autour de la tige (4) à partir de la chambre cylindrique (11) délimitée par le siège (3a) fermé par le clapet (3) et ouverte sur la chambre annulaire (14) du module (2) et son orifice (13) par des trous périphériques (8) dans la paroi de la vis creuse (1), le ressort (5) prenant appui par une extrémité sur le joint (37), et par l'autre extrémité sur l'épaulement (22) formé à la jonction du clapet (3) et de sa tige (4), la fuite autour de la tige (4) étant supprimée lors de l'ouverture du clapet par une portée (38) à la périphérie d'un épaulement de la tige (4) venant en contact du joint (37).

4) Raccord-démarreur selon l'une des revendications 1 à 3, caractérisé en ce que l'ensemble formé par le clapet (3) et la tige (4) comporte un second joint sur le clapet (3), qui délimite avec le premier joint (6a ou 37) une première chambre cylindrique (11a) contenant le ressort (5) et ouverte sur la face d'appui du clapet (3) sur son siège (3a), par un canal axial (20; ou 44, 43), puis un conduit radial (21; ou 56) de la tige (4) débouchant entre les deux joints, ledit second joint suivant les évolutions de la tige (4) et délimitant avec le siège (3a) une seconde chambre (11b ouverte par les trous périphériques (8) de la vis creuse (1) sur la chambre annulaire (14) du module (2).

5) Raccord-démarreur selon la revendication 4, caractérisé en ce que ledit second joint est un joint à double lèvre à profil en U (6b), maintenu en position sur l'épaulement (22) de l'ensemble clapet-tige par le ressort de rappel (5) qui prend appui par ses extrémités sur les deux joints (6a ou 37, 6b).

6) Raccord-démarreur selon la revendication 4, caractérisé en ce que ledit second joint est un joint torique (36b) monté à la périphérie du clapet (3).

7) Raccord-démarreur selon l'une des revendications 1 à 6, caractérisé en ce que les moyens pour conduire un débit réduit de fluide en dérivation du siège (3a) consistent en un canal axial (15 ou 20) dans l'ensemble formé du clapet (3) et de la tige (4), ouvert sur la face d'appui du clapet sur son siège, et communiquant avec un conduit radial (16) de diamètre calibré débouchant dans la chambre (11 ou 11b).

8) Raccord-démarreur selon l'une des revendications 1 à 6, caractérisé en ce que les moyens pour conduire un débit réduit de fluide en dérivation du siège (3a) consistent en une rainure (17) de largeur et profondeur calibrées, pratiquée sur la portée du clapet (3) sur son siège (3a).

9) Raccord-démarreur selon l'une des revendications 1 à 6, caractérisé en ce que les moyens pour conduire un débit réduit de fluide en dérivation du siège (3a) consistent en un trou (18) de diamètre calibré communiquant avec la chambre annulaire (14) du module (2), pratiqué dans la paroi de la vis creuse (1) entre le siège (3a) et l'orifice fileté (7).

10) Raccord-démarreur selon l'une des revendications 1 à 6, caractérisé en ce qu'il comprend des moyens pour conduire un débit réduit de fluide en dérivation du siège (3a) auxquels sont associés des moyens de réglage de ce débit.

11) Raccord-démarreur selon la revendication 10, caractérisé en ce que les moyens pour conduire et régler un débit réduit de fluide en dérivation du siège (3a) comportent des trous (29, 29a) de diamètres calibrés différents communiquant avec la chambre annulaire (14) du module (2), pratiqués dans la paroi de la vis creuse (1) entre le siège (3a) et l'orifice fileté (7), chacun de ces trous débouchant dans le fond de gorges circulaires (27, 27a) sur la paroi extérieure de la vis creuse et dont le profil est propre à recevoir un joint torique (28).

12) Raccord-démarreur selon la revendication 10, caractérisé en ce que les moyens pour conduire et régler un débit de fluide en dérivation du siège (3a) comportent des trous (23a, 23b, 23c) ou une rainure semi-circulaire (26a) de largeur et profondeur dégressives s'étendant de part et d'autre d'un trou (26), communiquant avec la chambre annulaire (14), pratiqués sur un même cercle dans la paroi de la vis creuse entre le siège (3a) et l'orifice fileté (7), une bague de matière élastique (24), avec un trou (25) au moins égal au plus grand des trous (23, 26), entourant la vis creuse et pouvant être ajustée en rotation afin de mettre en superposition son trou (25) et un des trous (23a, 23b, 23c) ou un point quelconque de la rainure (26).

13) Raccord-démarreur selon la revendication 10, caractérisé en ce que les moyens pour conduire et régler un débit réduit de fluide en dérivation du siège (3a) comportent une vis intérieure (31) dans l'orifice fileté (7) de la vis creuse (1), la vis (31) étant percée axialement pour conduire le plein débit de fluide, et pouvant être vissée à l'aide d'un outil approprié pour venir obturer plus ou moins partiellement un trou (30) pratiqué dans la paroi de la vis creuse entre le siège (3a) et l'orifice fileté (7), et qui débouche dans la chambre annulaire (14) du module (2).

14) Raccord-démarreur selon la revendication 10, caractérisé en ce que les moyens pour conduire et régler un débit réduit de fluide en dérivation du siège (3a) comportent une bague élastique semi-circulaire (33) pouvant glisser en rotation dans une rainure intérieure circulaire dans l'orifice fileté (7) de la vis creuse (1), à l'aide d'un outil approprié, pour venir démasquer l'un d'une pluralité de trous (32a, 32b, 32c) pratiqués dans la paroi de la vis creuse au fond de la rainure entre le siège (3a) et l'orifice fileté (7), et qui débouchent dans la chambre annulaire (14) du module (2).

15) Raccord-démarreur selon la revendication 10, caractérisé en ce que les moyens pour conduire et régler un débit réduit de fluide en dérivation du siège (3a) comportent une tige filetée (41; 54) pourvue d'un joint (42; 55), vissée dans un canal (33, 50) traversant axialement l'ensemble formé par le clapet (3) et la tige (4), l'extrémité inférieure de la tige (41; 54) obturant plus ou moins partiellement un conduit radial (40; 52) débouchant dans la chambre (11; 11b).

16) Raccord-démarreur selon la revendication 10, caractérisé en ce que les moyens pour conduire et régler un débit réduit de fluide en dérivation du siège (3a) comportent une tige-pointeau (47, 49) vissée dans un alésage axial (43) ouvert au sommet de l'ensemble formé par le clapet (3) et la tige (4), le pointeau (49) étant engagé dans l'orifice d'un conduit axial (45) au fond de l'alésage (43), communiquant avec un conduit radial (46) ouvert par un trou (8) dans la chambre (14), l'alésage (43) communiquant par ailleurs avec l'orifice de la vis creuse (1) au-dessous de la portée (3a) par un ou plusieurs conduits (44).

17) Raccord-démarreur selon l'une des revendications 1 à 16, caractérisé en ce que l'extrémité libre de la tige (4) comporte un rétrécissement (12) de sa section qui sort à l'extérieur de l'appareil à travers le bouchon (9) au moment de l'ouverture du clapet (3), l'épaulement formé par le rétrécissement (12) et la section de la tige (4) venant buter au fond de l'alésage (10) dans le bouchon (9) pour limiter mécaniquement la course d'ouverture du clapet (3), le dépassement du rétrécissement (12) par rapport au bouchon (9) permettant la visualisation de l'ouverture du clapet (3).

**Patentansprüche**

1. Anlaßventil-Verbindungsstück zum stufenlosen Druckaufbau in pneumatischen Anlagen, in Form eines Winkelstutzens, "Banjo" genannt, der eine Hohlschraube (1) mit einer Gewindeöffnung (7) an einem Ende, die eine Befestigung eines pneumatischen Bauteils erlaubt in der Öffnung, und einen abtrennbaren und um sich drehbaren Modul (2) aufweist, dadurch gekennzeichnet, daß die Hohlschraube (1) einen Mechanismus aus einer Ventilklappe (3) aufweist, die in ihrer Ruhelage ihren Sitz (3a), der den Hauptdurchgang für Fluid durch das Anlaßventil-Verbingungsstück bildet, mit Hilfe einer leichten Rückstellfeder (5) verschließt, deren Kraft im Vergleich zu den durch die Drücke aufgebrachten Kräften unbedeutend ist, welche Ventilklappe (3) mit einem Schaft (4) verbunden ist, der sich von dem Sitz (3a) fort gegen das der Gewindeöffnung (7) der Hohlschraube (1) gegenüberliegende Ende erstreckt und dessen freies Ende, das sich jenseits einer Dichtung in der Umgebungsluft befindet, durch die Bohrung (10) eines Stopfens (9) geführt ist, der das Gerät verschließt, wobei die Feder (5) koaxial zum Schaft (4) ist, dessen Querschnitt in Höhe der genannten Dichtung kleiner ist als derjenige der Ventilklappe (3) auf ihrem Sitz (3a), wobei ferner die Hohlschraube Einrichtungen zum Einleiten eines verringerten Durchsatzes von Fluid in eine Abzweigung des Sitzes (3a) zum Auffüllen einer Anlage stromabwärts des Gerätes aufweist, welche Ventilklappe (3) des weiteren entgegengesetzte Oberflächen aufweist, die dem stromabwärtigen bzw. stromaufwärtigen Druck ausgesetzt sind und deren Flächeninhalte, rechtwinklig zur Verschieberichtung, derartig sind, daß sie sich öffnet, wenn einerseits stromaufwärts ein Minimaldruck erreicht wird und andererseits stromabwärts ein Druck aufgebaut wird, der eine vom stromaufwärts herrschenden Druck abhängige Schwelle überschreitet.

2. Anlaßventil-Verbindungsstück nach Anspruch 1, dadurch gekennzeichnet, daß die genannte Dichtung, jenseits derselben sich der Schaft (4) der Ventilklappe (3) in Umgebungsluft befindet, eine doppellippige Dichtung (6) ist, in der er gleitet, die gegen den Stopfen (9) angedrückt wird und bei der die äußere Lippe eine zylindrische Kammer (11) abdichtet, die von dem durch die Ventilklappe (3) verschlossenen Sitz (3a) abgegrenzt wird und die zu der ringförmigen Kammer (14) des Moduls (2) und der Öffnung (13) über Umfangslöcher (8) im Mantel der Hohlschraube (1) geöffnet ist, wobei sich die Rückstellfeder (5) mit einem Ende im Hohlraum des Profils der Dichtung (6) und mit dem anderen Ende auf der Schulter (22) aufstützt, die an der Verbindungsstelle der Ventilklappe (3) mit ihrem Schaft (4) gebildet ist.

3. Anlaßventil-Verbindungsstück nach Anspruch 1, dadurch gekennzeichnet, daß die genannte Dichtung jenseits derselben sich der Schaft (4) der Ventilklappe (3) in Umgebungsluft befindet, eine flache Dichtung (37) ist, in der er gleitet, die zwischen der Hohlschraube (1) und dem Stopfen (9) eingespannt ist und eine leichte Undichtigkeit um den Schaft (4) aus der zylindrischen Kammer (11) zuläßt, die von dem durch die Ventilklappe (3) verschlossenen Sitz (3a) abgetrennt wird und sich in die ringförmige Kammer (14) des Moduls (2) und seine Öffnung (13) über Umfangslöcher (8) im Mantel der Hohlschraube (1) öffnet, wobei die Feder (5) sich mit einem Ende auf der Dichtung (37) und mit ihrem anderen Ende auf der Schulter (22) abstützt, die an der Verbindungsstelle zwischen der Ventilklappe (3) und deren Schaft (4) gebildet ist, wobei die Undichtheit um den Schaft (4) beim Öffnen der Ventilklappe durch eine am Umfang einer Schulter des Schaftes (4) umlaufende Auflagefläche (38) unterdrückt wird, die in Kontakt mit der Dichtung (37) kommt.

4. Anlaßventil-Verbindungsstück nach einem der Ansprüche 1 bis 3, dadurch gekennzeichnet, daß die durch die Ventilklappe (3) und den Schaft (4) gebildete Anordnung eine zweite Dichtung auf der Klappe (3) aufweist, die zusammen mit der ersten Dichtung (6a oder 37) eine erste zylindrische Kammer (11a) abgrenzt, die die Feder (5) enthält und an der Auflagefläche der Ventilklappe (3) auf deren Sitz (3a) durch einen axialen Kanal (20; oder 44, 43) und dann eine radiale Leitung (21; oder 45) im Schaft (4) geöffnet ist, die zwischen den zwei Dichtungen mündet, wobei die zweite Dichtung den Bewegungen des Schaftes (4) folgt und mit dem Sitz (3a) eine zweite Kammer (11b) bildet, die durch die Umfangslöcher (8) der Hohlschraube (10) in die ringförmige Kammer (14) des Moduls (2) geöffnet ist.

5. Anlaßventil-Verbindungsstück nach Anspruch 4, dadurch gekennzeichnet, daß die zweite Dichtung eine doppellippige Dichtung mit U-Profil (6b) ist, die auf der Schulter (22) der Ventilklappen-/Schaft-Anordnung durch die Rückstellfeder (5) an ihrem Platz gehalten wird, die sich mit ihren Enden auf den zwei Dichtungen (6a oder 37, 6b) abstützt.

6. Anlaßventil-Verbindungsstück nach Anspruch 4, dadurch gekennzeichnet, daß die zweite Dichtung eine O-Ring-Dichtung (36b) ist, die am Umfang der Ventilklappe (3) angebracht ist.

7. Anlaßventil-Verbindungsstück nach einem der Ansprüche 1 bis 6, dadurch gekennzeichnet, daß die Einrichtungen zum Leiten eines verringerten Durchsatzes an Fluid in die Abzweigung des Sitzes (3a) einen Axialkanal (15 oder 20) in der durch die Ventilklappe (3) und den Schaft (4) gebildeten Anordnung aufweisen, der sich zur Sitzseite der Ventilklappe hin erstreckt und mit einer radialen Leitung (16) mit kalibriertem Durchmesser in Verbindung steht, die in die Kammer (11 oder 11b) mündet.

8. Anlaßventil-Verbindungsstück nach einem der Ansprüche 1 bis 6, dadurch gekennzeichnet, daß die Einrichtungen zum Leiten verringerten Durchsatzes von Fluid in die Abzweigung des Sitzes (3a) eine Nut (17) mit kalibrierter Breite und Tiefe aufweisen, die in der Auflagefläche der Ventilklappe (3) ausgebildet ist.

9. Anlaßventil-Verbindungsstück nach einem der Ansprüche 1 bis 6, dadurch gekennzeichnet, daß die Einrichtungen zum Leiten verringerten Durchsatzes von Fluid in die Abzweuung des Sitzes (3a) ein Loch (18) mit kalibriertem Durchmesser aufweisen, das mit der Ringkammer (14) des Moduls (2) in Verbindung steht und im Mantel der Hohlschraube (1) zwischen dem Sitz (3a) und der Gewindeöffnung (17) angeordnet ist.

10. Anlaßventil-Verbindungsstück nach einem der Ansprüche 1 bis 6, dadurch gekennzeichnet, daß es Einrichtungen zum Leiten verringerten Durchsatzes von Fluid in die Abzweigung des Sitzes (3a) aufweist, denen Einrichtungen zum Einstellen des Durchsatzes zugeordnet sind.

11. Anlaßventil-Verbindungsstück nach Anspruch 10, dadurch gekennzeichnet, daß die Einrichtungen zum Leiten und Einstellen eines verringerten Durchsatzes an Fluid in die Ableitung des Sitzes (3a) Löcher (29, 29a) mit unterschiedlich kalibrierten Durchmessern aufweisen, die mit der Ringkammer (14) des Moduls (2) in Verbindung stehen und im Mantel der Hohlschraube (1) zwischen dem Sitz (3a) und der Gewindeöffnung (7) angeordnet sind, wobei jedes dieser Löcher in den Boden kreisförmiger Rillen (27, 27a) in der Außenwand der Hohlschraube mündet, deren Profil dazu geeignet ist, eine O-Ring-Dichtung (28) aufzunehmen.

12. Anlaßventil-Verbindungsstück nach Anspruch 10, dadurch gekennzeichnet, daß die Einrichtungen zum Leiten und Einstellen eines Durchsatzes an Fluid in der Abzweigung des Sitzes (3a) Löcher (23a, 23b, 23c) oder eine halbkreisförmige Rille (26a) mit abnehmender Breite und Tiefe aufweisen, die sich zu beiden Seiten eines Lochs (26) erstreckt und mit der ringförmigen Kammer (14) in Verbindung steht, die auf einem einzigen Kreis im Mantel der Hohlschraube zwischen dem Sitz (3a) und der Gewindeöffnung (7) angeordnet sind, wobei ein Kunststoffring (24) mit einem Loch (25), das mindestens so groß wie oder größer ist als die Löcher (23, 26), die Hohlschraube umgibt, und durch Verdrehen eingestellt werden kann, um sein Loch (25) mit einem der Löcher (23a, 23b, 23c) oder mit einem beliebigen Punkt der Rille (26) in Überlappung zu bringen.

13. Anlaßventil-Verbindungsstück nach Anspruch 10, dadurch gekennzeichnet, daß die Einrichtungen zum Leiten und Einstellen eines verringerten Durchsatzes an Fluid in die Abzweigung des Sitzes (3a) eine Innenschraube (31) in der Gewindeöffnung (7) der Hohlschraube (1) aufweisen, welche Schraube (31) axial durchbort ist, um den gesamten Durchsatz an Fluid zu leiten, und die mit Hilfe eines geeigneten Werkzeugs so verschraubt werden kann, daß sie ein Loch (30) mehr oder weniger teilweise verschließt, das im Mantel der Hohlschraube zwischen dem Sitz (3a) und der Gewindeöffnung (7) angebracht ist und das in die ringförmige Kammer (14) des Moduls (2) mündet.

14. Anlaßventil-Verbindungsstück nach Anspruch 10, dadurch gekennzeichnet, daß die Einrichtungen zum Leiten und Einstellen eines verringerten Durchsatzes an Fluid vom Sitz (3a) abzweigend einen elastischen halbkreisförmigen Ring (33) aufweisen, der drehbar in einer inneren kreisförmigen Nut in der Gewindeöffnung (7) der Hohlschraube (1) mit Hilfe eines geeigneten Werkzeugs verschoben werden kann, um ein Loch oder mehrere (32a, 32b, 32c) freizulegen, die im Mantel der Hohlschraube am Boden der Nut zwischen dem Sitz (3a) und der Gewindeöffnung (7) angeordnet sind und die in die ringförmige Kammer (14) des Moduls (2) münden.

15. Anlaßventil-Verbindungsstück nach Anspruch 10, dadurch gekennzeichnet, daß die Einrichtungen zum Leiten und Einstellen verringerten Durchsatzes von Fluid vom Sitz (3a) abzweigend einen Gewindestift (41; 54) aufweisen, der mit einer Dichtung (42; 55) versehen ist und in einen Kanal (33, 50) eingeschraubt ist, der die durch die Ventilklappe (3) und den Schaft gebildete Anordnung axial durchsetzt, wobei das untere Ende des Stiftes (41; 54) eine radiale Leitung (40; 52) mehr oder weniger teilweise verschließt, die in die Kammer (11; 11b) mündet.

16. Anlaßventil-Verbindungsstück nach Anspruch 10, dadurch gekennzeichnet, daß die Einrichtungen zum Leiten und Einstellen verringerten Durchsatzes an Fluid vom Sitz (3a) abzweigend eine Düsennadel (47, 49) aufweisen, die in eine axiale Bohrung (43) eingeschraubt ist, die zur Oberseite der durch die Ventilklappe (3) und den Schaft (4) gebildeten Anordnung offen ist, welche Düsennadel (49) in die Öffnung einer axialen Leitung (45) am Boden der Bohrung (43) eingesteckt ist, die mit einer radialen Leitung (46) in Verbindung steht, die über ein Loch (8) in die Kammer (14) geöffnet ist, wobei die Bohrung (43) des weiteren mit der Öffnung der Hohlschraube (1) unterhalb der Auflagefläche (3a) über eine oder mehrere Leitungen (44) in Verbindung steht.

17. Anlaßventil-Verbindungsstück nach einem der Ansprüche 1 bis 16, dadurch gekennzeichnet, daß das freie Ende des Schaftes (4) einen verengten Teil (12) des Schaftquerschnitts aufweist, welcher verengte Teil im Moment des Öffnens der Ventilklappe (3) durch den Stopfen (9) zur Außenseite des Geräts durchtritt, wobei die Schulter, die durch den verengten Teil (12) des Schaftes (4) gebildet ist, an dem Boden der Bohrung (10) im Stopfen (9) zur Anlage kommt, um den Öffnungshub der Ventilklappe (3) mechanisch zu begrenzen, wobei das Hindurchtreten des verengten Teils (12) durch den Stopfen (9) es erlaubt, das Öffnen der Ventilklappe (3) visuell zu erkennen.

**Claims**

1. A start-up coupling for the progressive pressurization of pneumatic equipment in the form of a right-angle banjo coupling constituted by a hollow screw (1) comprising at one end a threaded port member (7) rendering it possible for it to be mounted in the port member of a pneumatic component, and of a separable module (2) able to be turned about it, characterized in that the hollow screw (1) contains a mechanism constituted by a valve (3) shutting off, in its neutral position, its seat (3a) which constitutes the main passage for the fluid through the start-up coupling, owing to the effect of a light return spring (5) whose force is insignificant in relation to the forces caused by the pressures, the said valve (3) being fixed to a rod (4) extending away from the seat (3a) towards the end of the hollow screw (1) opposite its screw threaded port member (7) and whose free end, in the atmosphere beyond a seal, is guided in the bore (10) of a plug (9) which shuts off the apparatus, the spring (5) being coaxial to the rod (4) whose section is smaller at the level of the said seal than the section defined by the valve (3) on its seat (3a), the hollow screw comprising furthermore means in order to conduct a reduced rate of flow of the fluid bypassing the seat (3a) for filling the equipment downstream from the apparatus, the valve (3) furthermore having opposite surfaces subjected to the downstream pressure and the upstream pressure, whose areas, perpendicular to the direction of its displacement, are such that its opening is caused when, on the one hand, a minimum pressure is reached upstream and, on the other hand, a downstream pressure exceeding a threshold which is a function of the upstream pressure is established.

2. The start-up coupling as claimed in claim 1, characterized in that the said seal beyond which the rod (4) of the valve (3) is in the atmosphere is a twin lip seal (6) in which it slides, fitted to the plug (9) and of which the outer lip seals off a cylindrical chamber (11) delimited by the seat (3a) shut by the valve (3) and open towards the annular chamber (14) of the module (2) and its port member (13) by peripheral holes (8) in the wall of the hollow screw (1), said return spring (5) bearing at one end in a recess in the section of the seal (6) and at the other end against the shoulder (22) formed at the connection between the valve (3) and its rod (4).

3. The start-up coupling as claimed in claim 1, characterized in that the said seal beyond which the rod (4) of the valve (3) is in the atmosphere is a flat seal (37) in which it slides, gripped between the hollow screw (1) and the plug (9) and rendering possible a low degree of leakage around the rod (4) from the cylindrical chamber (11) delimited by the seat (3a) shut off by the valve (3) and open towards the annular chamber (14) of the module (2) and its port member (13) through peripheral holes (8) in the wall of the hollow screw (1), the spring (5) bearing at one end on the seal (37) and at the other end on the shoulder (22) formed at the connection between the valve (3) and the rod (4) thereof, leakage around the rod (4) being halted on opening of the valve by a surface (38) at the periphery of a shoulder of the rod (4) coming into contact with the seal (37).

4. The start-up coupling as claimed in any one of the preceding claims 1 through 3, characterized in that an assembly constituted by the valve (3) and the rod (4) comprises a second seal on the valve (3) which with the first seal (6a or 37) delimits a first cylindrical chamber (11a) containing the spring (5) and open to the bearing surface of the valve (3) on its seat (3a), by way of an axial duct (20; or 44 and 43), then a radial duct (21; or 56) of the rod (4) opening between the two seals, the said second seal following the changes in form of the rod (4) and delimiting with the seat (3a) a second chamber (11b open through peripheral holes (8) to the hollow screw (1) on the annular chamber (14) of the module (2).

5. The start-up coupling as claimed in claim 4, characterized in that the said second seal is a twin lip seal (6b) with a U-like cross section, maintained in position on the shoulder (22) of the assembly formed by the valve and the rod by the return spring (5), which bears at its ends on the two seals (6a or 37, 6b).

6. The start-up coupling as claimed in claim 4, characterized in that the said second seal is a toroidal seal (36b) mounted on the periphery of the valve (3).

7. The start-up coupling as claimed in any one of the preceding claims 1 through 6, characterized in that the means for the conduction of a reduced rate of flow of the fluid bypassing the seat (3a) consist of an axial duct (15 or 20) in the assembly constituted by the valve (3) and the rod (4), open towards bearing surface of the valve on its seat, and in communication via a radial duct (16) with a predetermined diameter with the chamber (11 or 11b).

8. The start-up coupling as claimed in any one of the preceding claims 1 through 6, characterized in that the means for the conduction of a reduced rate of flow of fluid bypassing the seat (3a) consist of a groove (17) with a predetermined depth and width, made in the surface of the valve (3) on its seat (3a).

9. The start-up coupling as claimed in any one of the preceding claims 1 through 6, characterized in that the means for the conduction of a reduced rate of flow of fluid bypassing the seat (3a) consist of a hole (18) with a predetermined diameter in communication with the annular chamber (14) of the module (2), made in the wall of the hollow screw (1) between the seat (3a) and the screw threaded port member (7).

10. The start-up coupling as claimed in any one of the preceding claims 1 through 6, characterized in that it comprises means in order to conduct a reduced rate of flow of the fluid bypassing the seat (3a) with which means for the regulation of this rate are associated.

11. The start-up coupling as claimed in claim 10, characterized in that the means for the conduction and the regulation of a reduced rate of flow of the fluid bypassing the seat (3a) comprise holes (29 and 29a) with different predetermined diameters communicating with the annular chamber (14) of the module, made in the wall of the hollow screw (1) between the seat (3a) and the screw threaded port member (7), each of the holes opening into the bottom of circular grooves (27 and 27a) in the outer wall surface of the hollow screw and whose section is adapted to receive a toroidal seal (28).

12. The start-up coupling as claimed in claim 10, characterized in that the means for the conduction and the regulation of a reduced rate of flow of the fluid bypassing the seat (3a) comprise holes (23a, 23b and 23c) or a semi-circular groove (26a) with a decreasing width and depth extending on both sides of a hole (26) connected with the annular chamber (14), made on a common same circle in the wall of the hollow screw between the seat (3a) and the screw threaded port member (7), a ring of elastic material (24), with a hole (25) at least equal to the largest of the holes (23 and 26) surrounding the hollow screw and being able to be adjusted in rotation in order to align its hole (25) and one of the holes (23a, 23b and 23c) or any point on the groove (26).

13. The start-up coupling as claimed in claim 10, characterized in that the means for the conduction and the regulation of a reduced rate of flow of the fluid bypassing the seat (3a) comprise an inner screw (31) in the screw threaded port member (7) of the hollow screw (1), the screw (31) being ducted axially in order to conduct the full rate of flow of the fluid and being able to be screwed by the intermediary of a suitable tool in order to more or less completely shut off a hole (30) made in the wall of the hollow screw between the seat (3a) and the screw threaded port member (7) and which opens into the annular chamber (14) of the module (2).

14. The start-up coupling as claimed in claim 10, characterized in that the means for the conduction and the regulation of a reduced rate of flow of the fluid bypassing the seat (3a) comprise an elastic semi-circular ring (33) able to slide in rotation in an inner circular groove in the screw threaded port member (7) of the hollow screw (1), using a suitable tool, in order to uncover one of a plurality of holes (32a, 32b and 32c) made in the wall of the hollow screw at the bottom of the groove between the seat (3a) and the screw threaded port member (7) and which open into the annular chamber (14) of the module (2).

15. The start-up coupling as claimed in claim 10, characterized in that the means for the conduction and the regulation of a reduced rate of flow of the fluid bypassing the seat (3a) comprise a screw threaded rod (41; 54) provided with a seal (42; 55), screwed into a duct (33 and 50) axially extending through the assembly constituted by the valve (3) and the rod (4), the lower end of the rod (41; 54) shutting off more or less partly a radial duct (4; 52) opening into the chamber (11; 11b).

16. The start-up coupling as claimed in claim 10, characterized in that the means for the conduction and the regulation of a reduced rate of flow of the fluid bypassing the seat (3a) comprise a needle (47 and 49) screwed into the an axial bore (43) opening at the top of the assembly constituted by the valve (3) and the rod (4), the needle (49) being fitted into the port member of an axial duct (45) at the bottom of the bore (43) connected with a radial duct (46) opening by means of a hole (8) into the chamber (14), the bore (43) being connected furthermore with the port member of the hollow screw (1) underneath the bearing surface (3a) by one or a plurality of ducts (44).

17. The start-up coupling as claimed in any one of the preceding claims 1 through 16, characterized in that the free end of the rod (4) comprises a waist (12) in its section which emerges to the outside of the apparatus through the plug (9) at the moment of opening of the valve (3), the shoulder constituted by the waist (12) and the section of the rod (4) coming into abutment with the bottom of the bore (10) in the plug (9) in order to mechanically limit the opening movement of the valve (3), movement past the waist (12) in relation to the plug (9) making it possible to see that valve (3) is open.

FIG. 1

FIG. 2

FIG. 3

FIG. 4

FIG. 5

FIG. 6

FIG. 7

FIG. 8

FIG. 9

FIG. 10

FIG. 11

FIG. 12